# FASCICULE DE BREVET EUROPEEN

(11) **EP 0 635 651 B1**
(45) Date de publication et mention de la délivrance du brevet: **14.01.1998**
(21) Numéro de dépôt: 94111306.0
(22) Date de dépôt: 20.07.1994
(51) Int. Cl.: F16C 33/74, B60S 1/34

(54) **Agencement de palier pour un arbre tournant appartenant à un mécanisme d'entrainement d'un essuie-glace**
Lageranordnung für eine rotierende Welle einer Scheibenwischeranlage
Bearing arrangement for a rotating shaft from a screen wiper drive mechanism

(30) Priorité: 22.07.1993 FR 9309042
(43) Date de publication de la demande: 25.01.1995
(73) Titulaire: VALEO SYSTEMES D'ESSUYAGE, 78321 La Verrière (FR)
(72) Inventeur: Renoux, Pascal, F-86100 Chatellerault (FR)
(74) Mandataire: Gamonal, Didier

(56) Documents cités:
- EP-A- 0 467 750
- DE-A- 3 914 231
- FR-A- 2 246 202
- FR-A- 2 377 553

## Description

La présente invention concerne un agencement de palier pour un arbre tournant.

L'invention concerne plus particulièrement un agencement de palier pour un arbre appartenant à un mécanisme d'entraînement d'un essuie-glace, et par exemple pour un arbre de sortie sur une extrémité duquel est fixée une tête d'entraînement d'un bras d'essuie-glace.

On connaît, notamment du document EP-A-0 467 750, un exemple d'un tel agencement de palier du type comportant un boîtier de palier dans lequel est formé un alésage qui est traversé par l'arbre tournant avec interposition d'au moins une douille de palier de manière à permettre le montage à rotation de l'arbre dans le boîtier, et qui comporte au moins un collet radial interne dont le diamètre intérieur est supérieur au diamètre interne de la douille de palier, ledit collet radial comportant : une première face constituant un premier épaulement pour le positionnement axial d'une garniture d'étanchéité agencée dans l'alésage qui coopère avec les surfaces en vis-à-vis de l'alésage et de l'arbre tournant ladite garniture d'étanchéité étant en appui contre le premier épaulement, et une deuxième face constituant un second épaulement sur lequel est en butée une extrémité de la douille de palier, un tronçon d'extrémité dudit arbre faisant saillie axialement vers l'extérieur au-delà d'une face radiale d'extrémité du boîtier de palier.

Selon l'agencement connu, la garniture d'étanchéité, qui est par exemple réalisée sous la forme d'un joint torique d'étanchéité, est agencée dans un logement en forme de rainure sensiblement semi-circulaire Le montage du joint torique dans le logement annulaire est difficile et la garniture d'étanchéité peut être endommagée pendant l'introduction dans le logement. Une telle conception n'est donc pas satisfaisante dans la mesure où elle ne permet pas de maîtriser avec précision la position et l'état de la garniture d'étanchéité à l'issue des opérations de montage et dans la mesure où il est difficile de procéder à un remplacement de la garniture d'étanchéité.

Afin de remédier à ces inconvénients, l'invention propose un agencement de palier du type mentionné précédemment, dans lequel la garniture d'étanchéité peut être mise en place par introduction axiale dans un logement annulaire cylindrique qui est délimité par les surfaces cylindriques en vis-à-vis de l'alésage et de l'arbre et qui débouche dans la face radiale d'extrémité du boîtier ; et une bague de retenue est disposée à l'extrémité du boîtier de palier, ladite bague de retenue comportant une portion tubulaire qui s'étend axialement à l'intérieur du logement annulaire et dont la face d'extrémité constitue une butée pour la garniture d'étanchéité.

Selon d'autres caractéristiques de l'invention :
- la bague de retenue comporte une portion formant capuchon qui est traversée par l'arbre et qui prend appui axialement contre la face radiale d'extrémité du boîtier ;
- la bague de retenue comporte des moyens complémentaires d'étanchéité qui coopèrent avec une portion en vis-à-vis de la surface cylindrique de l'arbre ;
- ces moyens d'étanchéité comportent une lèvre d'étanchéité réalisée venue de matière avec la bague de retenue et qui s'étend radialement en saillie depuis la surface cylindrique de la bague pour coopérer de manière étanche avec la surface cylindrique de l'arbre ;
- la lèvre d'étanchéité est formée au voisinage de l'extrémité libre de la portion formant capuchon de la bague de retenue ;
- la portion en forme de capuchon présente une forme extérieure de révolution profilée pour guider l'écoulement de liquide vers l'extérieur du boîtier ;
- la portion tubulaire de la bague de retenue est emboîtée élastiquement dans le logement annulaire ;
- la portion tubulaire de la bague de retenue est fendue axialement pour constituer des pattes déformables élastiquement ;
- la garniture d'étanchéité est réalisée venue de matière à l'extrémité libre de la portion tubulaire de la bague de retenue ;
- il est prévu des moyens d'immobilisation axiale de la bague de retenue par rapport au boîtier.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section axiale partielle de la partie supérieure d'un agencement de palier selon l'état de la technique ;
- la figure 2 est une vue similaire à celle de la figure 1 illustrant la mise en place de la garniture d'étanchéité dans un agencement de palier réalisé conformément aux enseignements de l'invention ;
- la figure 3 est une vue en perspective éclatée illustrant un premier mode de réalisation d'un agencement de palier réalisé conformément aux enseignements de l'invention ;
- la figure 4 est une vue similaire à celle de la figure 3 en vue extérieure et sur laquelle on a ôté la portion de la tête d'entraînement ;
- la figure 5 est une vue similaire à celle de la figure 3 illustrant une première variante de réalisation de l'agencement de palier illustré à la figure 3 ;
- la figure 6 est une vue à plus grande échelle d'un détail de la figure 5 entouré par un cercle ;
- la figure 7 est une vue similaire à celle de la figure 5 illustrant une variante de réalisation de la bague de retenue ;
- la figure 8 est une vue en perspective à plus grande échelle de la bague de retenue appartenant à l'agencement de la figure 7 ;
- la figure 9 est une vue similaire à celle de la figure 3 illustrant un autre mode de réalisation d'un agencement de palier conforme aux enseignements de l'invention ;
- la figure 10 est une vue similaire à celle de la figure 5 illustrant une variante de réalisation de l'agencement de palier et de la bague de retenue ;
- la figure 11 est une vue similaire à celle de la figure 5 illustrant une variante de réalisation de la bague de retenue ; et
- la figure 12 est une vue de détail à plus grande échelle de la portion supérieure de la bague de retenue entourée par un cercle sur la figure 11.

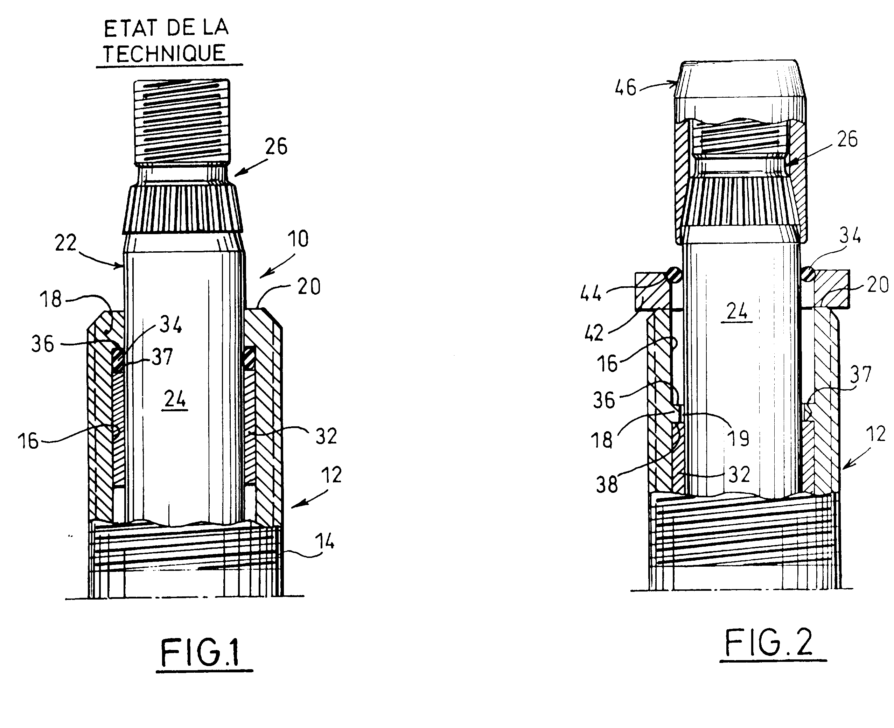

L'agencement de palier de palier 10 selon l'état de la technique illustré à la figure 1 comporte un boîtier de palier 12 de forme générale tubulaire cylindrique dont la partie supérieure comporte un filetage 14 pour permettre son montage, par vissage, par exemple dans un support fixe (non représenté) de la structure de caisse d'un véhicule automobile.

Le boîtier 12 comporte un alésage interne 16 fermé à sa partie supérieure par un collet radial 18 dont la face supérieure annulaire 20 est traversée par le corps 22 d'un arbre d'entraînement 24 appartenant au mécanisme d'entraînement d'un essuie-glace (non représenté).

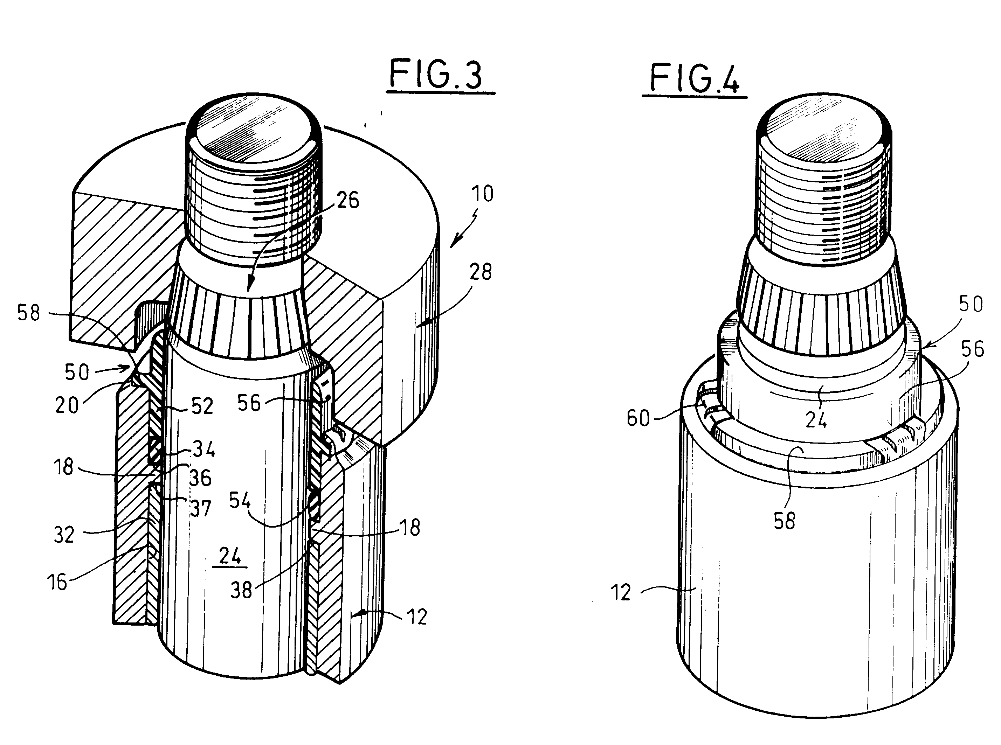

La partie axiale d'extrémité supérieure 26 de l'arbre 24 comporte des moyens connus pour permettre sa liaison avec une tête d'entraînement d'un bras d'essuie-glace (non représenté) telle que par exemple la tête d'entraînement dont une portion 28 est illustrée à la figure 3.

L'arbre 24 est monté à rotation dans le boîtier de palier 12 avec interposition d'au moins une douille de palier en bronze 32 qui est montée à force dans l'alésage 16.

L'étanchéité du palier est assurée au moyen d'un joint torique d'étanchéité 34 qui est disposé dans un logement annulaire délimité latéralement par les surfaces cylindriques en vis-à-vis de l'alésage 16 et de l'arbre 24 et axialement, d'une part par un épaulement radial 36 constitué par la face radiale interne du collet 18 et, d'autre part, par la face annulaire d'extrémité 37 de la douille 32.

Comme cela a été expliqué précédemment, cet agencement selon l'état de la technique, ne permet pas de maîtriser avec précision la position axiale de la douille 32 dans l'alésage 16 et ne permet donc pas de maîtriser l'état final du joint torique 34 à l'issue des opérations de montage.

On décrira maintenant les différents modes et variantes de réalisation de l'invention en se référant aux figures 2 à 12 sur lesquelles des éléments identiques ou similaires à ceux de l'état de la technique sont désignés par les mêmes chiffres de référence.

Comme on peut le voir notamment sur la figure 3, l'épaulement 36 du collet radial 18 fait fonction de surface d'appui pour le positionnement du joint torique 34 tandis que l'épaulement opposé 38 constitué par l'autre face du collet 18 constitue désormais une surface de butée pour le bord annulaire d'extrémité 37 de la douille de palier 32.

La mise en place de la douille de palier 32 dans l'alésage 16 s'effectue donc indépendamment de la mise en place du joint torique 34 et ceci par introduction axiale de la douille, du bas vers le haut en considérant les figures 2 et 3 jusqu'à la venue en butée de la surface 37 contre l'épaulement 38.

La mise en place du joint torique d'étanchéité 34 dans le logement annulaire délimité axialement par l'épaulement 36 s'effectue, comme cela est illustré à la figure 2, par introduction axiale de haut en bas, en considérant cette figure.

Afin de ne pas endommager le joint 34 lors de son introduction, et notamment lors du passage dans l'ouverture du logement annulaire qui débouche dans la face radiale d'extrémité 20 du boîtier 12, il est possible d'utiliser une bague de montage 42 comportant un chanfrein d'introduction 44.

La partie supérieure 26 de l'arbre 24 est également protégée par un manchon de protection 46 pour éviter d'endommager le joint torique 34.

Le joint d'étanchéité 34 est poussé axialement, à l'aide d'un outil non représenté, jusqu'à ce qu'il vienne occuper sa position normale de fonctionnement en appui contre l'épaulement 36.

Comme cela est illustré avec précision sur la figure 2, le diamètre de la surface cylindrique interne 19 du collet radial 18 est bien entendu légèrement supérieur au diamètre interne de la douille de palier 32 afin d'éviter toute interférence mécanique avec l'arbre tournant 24 qui est guidé en rotation par la douille en bronze 32.

Afin d'assurer le maintien en place du joint d'étanchéité 34 dans son logement délimité axialement par l'épaulement 36, l'agencement selon l'invention comporte une bague de retenue 50.

La bague 50 est un élément en matière plastique qui comporte une portion inférieure tubulaire 52 qui s'étend à l'intérieur du logement annulaire et dont le bord annulaire d'extrémité axiale 54 constitue une surface de butée pour la garniture d'étanchéité 34 qui est ainsi maintenue en position entre les deux surfaces en vis-à-vis 36 et 54.

La bague de retenue 50 comporte également une portion supérieure en forme de capuchon 56 qui entoure l'arbre 24 et qui comporte une collerette radiale extérieure 58 qui s'étend au-dessus de la face annulaire radiale d'extrémité 20 du boîtier 12 sur laquelle elle prend appui.

La bague de retenue 50 assure donc ainsi, par l'intermédiaire de sa portion supérieure formant capuchon 56, une fonction de protection du palier en évitant notamment la pénétration de liquide dans ce dernier.

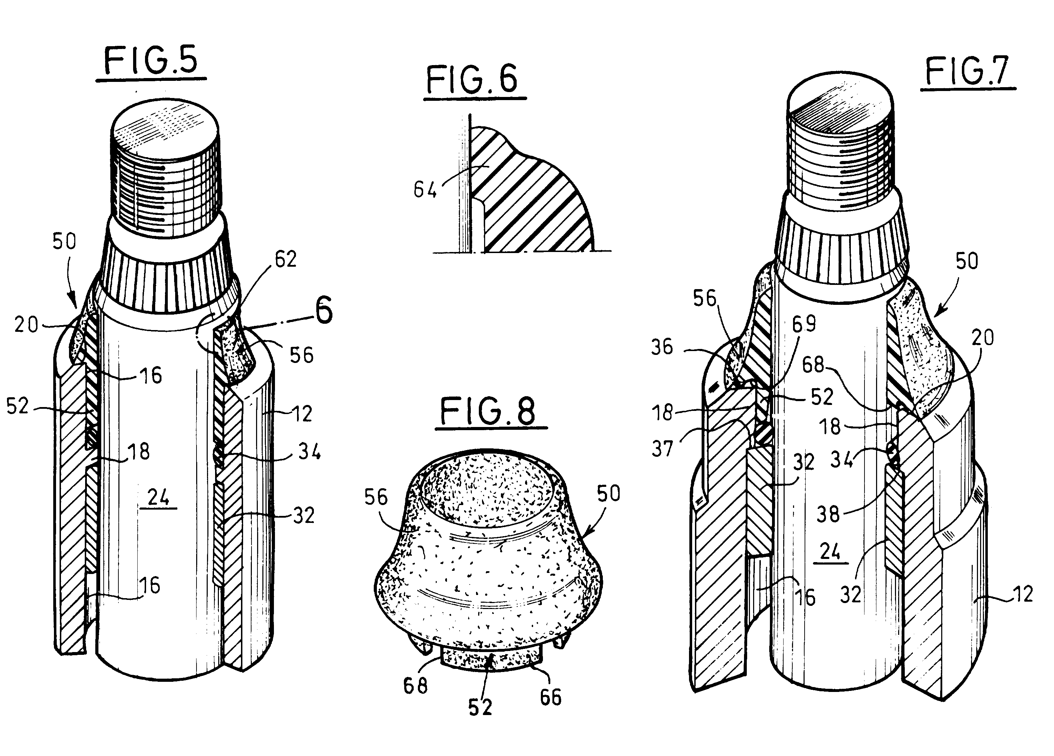

L'immobilisation en position montée de la bague de retenue 50 par rapport au boîtier 12 peut par exemple être assurée par sertissage de pattes d'immobilisation 60 sur la collerette radiale 58 comme cela est illustré sur les figures 3 et 4.

Afin de simplifier la représentation de l'agencement, le filetage 14 n'est pas illustré sur les figures 3 à 12.

Dans la variante de réalisation illustrée aux figures 5 et 6, la portion supérieure formant capuchon 56 de la bague de retenue 50 présente un profil plus épais et elle comporte, au voisinage de son bord d'extrémité libre 62, une lèvre interne radiale d'étanchéité complémentaire 64 qui coopère avec la portion en vis-à-vis de la surface cylindrique périphérique de l'arbre 24.

Dans le cas de la figure 5, le tronçon inférieur tubulaire 52 de la bague de retenue 50 est emboîté à force dans l'alésage 16 afin d'immobiliser la bague 50 en position sur le boîtier 12.

Dans le mode de réalisation illustré aux figures 7 et 8, la portion inférieure tubulaire 52 de la bague de retenue 50 est constituée par plusieurs pattes déformables élastiquement 66 délimitées par des fentes axiales 68 de manière à permettre un emboîtement élastique de cette portion inférieure 52 dans l'alésage 16 comme cela est illustré, en position assemblée, à la figure 7.

Afin de garantir la fonction d'élasticité des pattes 66, un dégagement annulaire en forme de demi-gorge 69 est réalisé dans la face inférieure plane de la portion supérieure 56 formant capuchon de la bague de retenue 50 qui est en appui sur la face radiale d'extrémité 20 du boîtier 12.

Dans le mode de réalisation illustré à la figure 7, le collet radial 18 est formé à l'extrémité supérieure du boîtier 12 et sa face radiale supérieure constituant l'épaulement 36 se confond ici avec la face radiale annulaire d'extrémité 20 du boîtier 12.

La garniture d'étanchéité 34 n'est donc pas positionnée directement sur l'épaulement 36 mais elle prend appui sur la face annulaire d'extrémité 37 de la douille 32 qui est elle-même en appui axial contre l'épaulement 38.

Le positionnement de la garniture d'étanchéité 34 par rapport à une surface d'appui fixe du boîtier 12 s'effectue donc ici indirectement par l'intermédiaire du bord annulaire d'extrémité 37 de la douille 32.

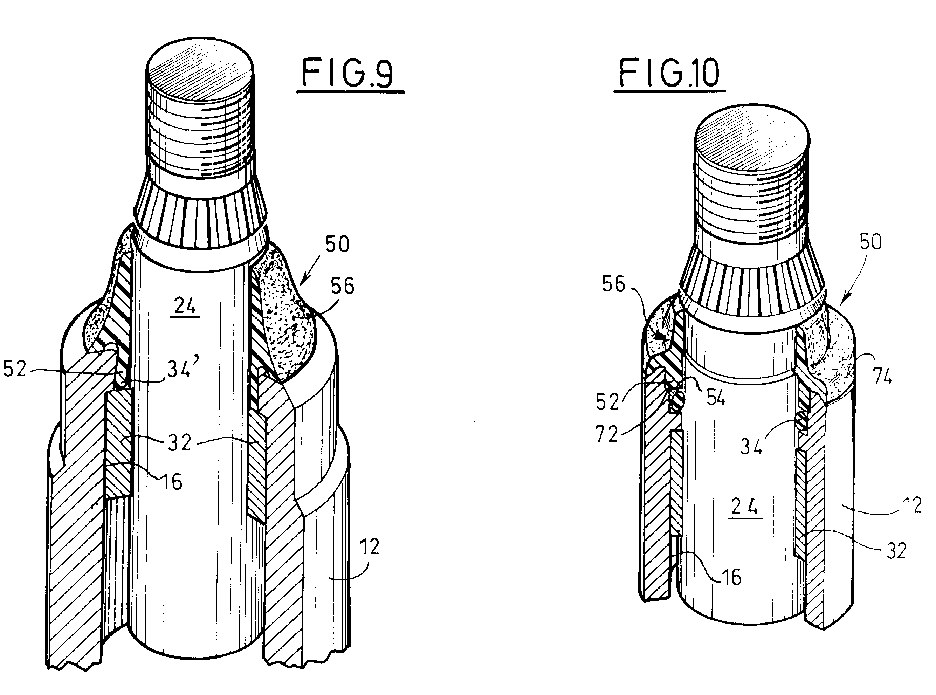

Par rapport au mode de réalisation illustré à la figure 7, la variante représentée à la figure 9 diffère de celui-ci en ce que la garniture d'étanchéité 34 est réalisée venue de matière sous la forme d'un bord d'étanchéité 34' formé à l'extrémité libre de la portion tubulaire 52 de la bague de retenue 50, la portion tubulaire 52 étant ici une portion complète non fendue.

L'agencement illustré à la figure 10 constitue une variante de celui illustré à la figure 5 dans laquelle le bord annulaire d'extrémité axiale 54 de la portion tubulaire 52 de la bague de retenue 50 prend appui axialement contre un troisième épaulement radial 72 de l'alésage 16, la hauteur axiale du logement annulaire dans lequel est située la garniture 34 étant ainsi parfaitement déterminée et correspondant à la distance séparant les épaulements 72 et 36.

On voit également sur la figure 10 que la portion supérieure formant capuchon 56 de la bague de retenue 50 peut comporter une lèvre latérale d'étanchéité 74 qui recouvre entièrement la face radiale d'extrémité supérieure du boîtier 12.

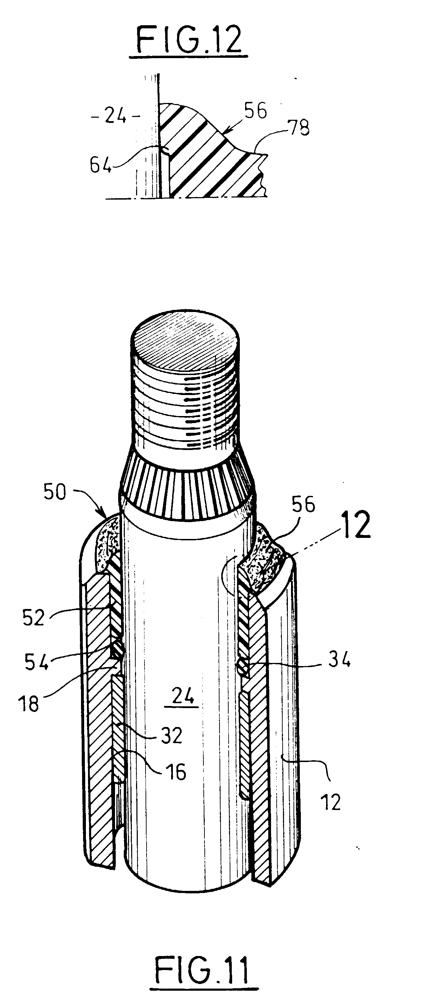

Dans le mode de réalisation illustré aux figures 11 et 12, qui est très voisin de celui illustré à la figure 5, on constate que la portion supérieure formant capuchon 56 de la bague de retenue 50 présente une forme profilée de révolution 78 qui est conçue de manière à favoriser l'écoulement de liquide le long de cette portion formant capuchon 56 pour éviter sa pénétration à l'intérieur de l'alésage 16 et pour le guider directement à l'extérieur du boîtier 12.

## Revendications

1. Agencement de palier (10) pour un arbre tournant (24) appartenant à un mécanisme d'entraînement d'un essuie-glace (28) du type comportant un boîtier (12) dans lequel est formé un alésage (16) qui est traversé par l'arbre (24) avec interposition d'au moins une douille de palier (32) et qui comporte au moins un collet radial interne (18) dont le diamètre intérieur est supérieur au diamètre interne de la douille de palier (32), ledit collet radial (18) comportant :
- une première face constituant un premier épaulement (36) pour le positionnement axial d'une garniture d'étanchéité (34) agencée dans l'alésage (16) qui coopère avec les surfaces en vis-à-vis de l'alésage (16) et de l'arbre (24), ladite garniture d'étanchéité étant en appui contre le premier épaulement (36), et
- une deuxième face constituant un second épaulement (38) sur lequel est en butée une extrémité (37) de la douille de palier (32), un tronçon d'extrémité (26) dudit arbre (24) faisant saillie axialement vers l'extérieur au-delà d'une face radiale d'extrémité (20) du boîtier de palier (12), caractérisé en ce que la garniture d'étanchéité (34) peut être mise en place par introduction axiale dans un logement annulaire cylindrique qui est délimité par les surfaces cylindriques en vis-à-vis de l'alésage (16) et de l'arbre (24) et qui débouche dans la face radiale d'extrémité (20) du boîtier (12), et en ce qu'une bague de retenue (50) est disposée à l'extrémité (20) du boitîer de palier (12), ladite bague de retenue (50) comportant une portion tubulaire (52) qui s'étend axialement à l'intérieur du logement annulaire et dont la face d'extrémité (54) constitue une butée pour la garniture d'étanchéité (34).

2. Agencement de palier selon la revendication 1, caractérisé en ce que la bague de retenue (50) comporte une portion (56) formant capuchon qui est traversée par l'arbre (24) et qui prend appui axialement contre la face radiale d'extrémité (20) du boîtier (12).

3. Agencement de palier selon l'une des revendications 1 ou 2, caractérisé en ce que la bague de retenue (50) comporte des moyens d'étanchéité (64) qui coopèrent avec une portion en vis-à-vis de la surface cylindrique de l'arbre (24).

4. Agencement de palier selon la revendication 3, caractérisé en ce que les moyens d'étanchéité comportent une lèvre d'étanchéité (64) réalisée venue de matière avec la bague de retenue (50) et qui s'étend radialement en saillie depuis la surface cylindrique interne de la bague de retenue (50) pour coopèrer de manière étanche avec la surface cylindrique de l'arbre (24).

5. Agencement de palier selon la revendication 4 prise en combinaison avec la revendication 2, caractérisé en ce que la lèvre d'étanchéité (64) est formée au voisinage de l'extrémité libre (62) de la portion formant capuchon (56) de la bague de retenue (50).

6. Agencement de palier selon l'une des revendications 2 ou 5, caractérisé en ce que la portion en forme de capuchon (56) présente une forme extérieure de révolution (78) profilée pour guider l'écoulement de liquide vers l'extérieur du boîtier (12).

7. Agencement de palier selon l'une des revendications précédentes, caractérisé en ce que la portion tubulaire (52) de la bague de retenue (50) est emboîtée élastiquement dans le logement annulaire.

8. Agencement de palier selon la revendication 7, caractérisé en ce que la portion tubulaire (52) de la bague de retenue (50) est fendue axialement pour constituer des pattes déformables élastiquement (66) .

9. Agencement de palier selon l'une quelconque des revendications 1 à 6, caractérisé en ce que la garniture d'étanchéité (34) est réalisée venue de matière (34) à l'extrémité libre de la portion tubulaire (52) de la bague de retenue (50).

10. Agencement de palier selon l'une quelconque des revendications précédentes, caractérisé en ce qu'il est prévu des moyens (60) d'immobilisation axiale de la bague de retenue (50) par rapport au boîtier (12).

## Patentansprüche

1. Lageranordnung (10) für eine rotierende Welle (24), die zu einem Antriebsmechanismus eines Scheibenwischers (28) gehört, in der Ausführung mit einem Gehäuse (12), in das eine Bohrung (16) eingearbeitet ist, durch die die Welle (24) unter Einfügung mindestens einer Lagerbuchse (32) hindurchgeht, und das mindestens einen radialen Innenbund (18) umfaßt, dessen Innendurchmesser größer als der Innendurchmesser der Lagerbuchse (32) ist, wobei der besagte radiale Bund (18) die folgenden Teile umfaßt:
- eine erste Fläche, die eine erste Schulter (36) für die axiale Positionierung einer in der Bohrung (16) angeordneten Dichtung (34) bildet, die mit den gegenüberliegenden Flächen der Bohrung (16) und der Welle (24) zusammenwirkt, wobei die besagte Dichtung an der ersten Schulter (36) zur Anlage kommt,
- und eine zweite Fläche, die eine zweite Schulter (38) bildet, an der ein Ende (37) der Lagerbuchse (32) zum Anschlag kommt, wobei ein Endstück (26) der besagten Welle (24) über eine radiale Abschlußfläche (20) des Lagergehäuses (12) hinaus axial nach außen vorsteht,
**dadurch gekennzeichnet,** daß die Dichtung (34) durch axiale Einführung in eine zylindrische ringförmige Aufnahme eingesetzt werden kann, die durch die gegenüberliegenden zylindrischen Flächen der Bohrung (16) und der Welle (24) begrenzt wird und die in der radialen Abschlußfläche (20) des Gehäuses (12) mündet, und daß ein Haltering (50) am Ende (20) des Lagergehäuses (12) vorgesehen ist, wobei der besagte Haltering (50) einen rohrförmigen Abschnitt (52) umfaßt, der sich axial im Innern der ringförmigen Aufnahme erstreckt und dessen Abschlußfläche (54) einen Anschlag für die Dichtung (34) bildet.

2. Lageranordnung nach Anspruch 1 , **dadurch gekennzeichnet**, daß der Haltering (50) einen als Abdeckkappe ausgebildeten Abschnitt (56) umfaßt, durch den die Welle (24) hindurchgeht und der axial an der radialen Abschlußfläche (20) des Gehäuses (12) zur Anlage kommt.

3. Lageranordnung nach einem der Ansprüche 1 oder 2, **dadurch gekennzeichnet,** daß der Haltering (50) Dichtungsmittel (64) umfaßt, die mit einem gegenüberliegenden Abschnitt der zylindrischen Fläche der Welle (24) zusammenwirken.

4. Lageranordnung nach Anspruch 3 , **dadurch gekennzeichnet**, daß die Dichtungsmittel eine Dichtlippe (64) umfassen, die einstückig mit dem Haltering (50) ausgeführt ist und die sich radial von der zylindrischen Innenfläche des Halterings (50) aus vorstehend erstreckt, um dicht mit der zylindrischen Fläche der Welle (24) zusammenzuwirken.

5. Lageranordnung nach Anspruch 4 in Kombination mit Anspruch 2 , **dadurch gekennzeichnet**, daß die Dichtlippe (64) in der Nähe des freien Endes (62) des als Abdeckkappe ausgebildeten Abschnitts (56) des Halterings (50) ausgebildet ist.

6. Lageranordnung nach einem der Ansprüche 2 oder 5, **dadurch gekennzeichnet,** daß der als Abdeckkappe ausgebildete Abschnitt (56) eine rotationssymmetrische profilierte äußere Form (78) aufweist, um das Abfließen von Flüssigkeit aus dem Gehäuse (12) heraus zu führen.

7. Lageranordnung nach einem der vorangehenden Ansprüche, **dadurch gekennzeichnet,** daß der rohrförmige Abschnitt (52) des Halterings (50) elastisch in die ringförmige Aufnahme eingepaßt ist.

8. Lageranordnung nach Anspruch 7 , **dadurch gekennzeichnet,** daß der rohrförmige Abschnitt (52) des Halterings (50) axial geteilt ist, um elastisch verformbare Ansätze (66) zu bilden.

9. Lageranordnung nach einem der Ansprüche 1 bis 6, **dadurch gekennzeichnet**, daß die Dichtung (34) einstückig (34) am freien Ende des rohrförmigen Abschnitts (52) des Halterings (50) angeformt ist.

10. Lageranordnung nach einem der vorangehenden Ansprüche, **dadurch gekennzeichnet,** daß Mittel (60) für die axiale Sicherung des Halterings (50) im Verhältnis zum Gehäuse (12) vorgesehen sind.

## Claims

1. A bearing (10) for a rotatable shaft (24) of a drive mechanism for a screen wiper (28), of the type comprising a casing (12) in which is formed a bore (16) through which the shaft (24) extends, with at least one bearing sleeve (32) being interposed, and which includes at least one internal radial collar element (18), the internal diameter of which is greater than the internal diameter of the bearing sleeve (32), the said radial collar element (18) having:
- a first face constituting a first shoulder (36) for the axial positioning of a sealing member (34) which is disposed in the bore (16) and which cooperates with the surfaces, in facing relationship with each other, of the bore (16) and the shaft (24), the said sealing member being in engagement against the first shoulder (36), and
- a second face constituting a second shoulder (38) on which an end (37) of the bearing sleeve (32) is in abutment, with an end portion (25) of the said shaft (24) projecting axially outwardly beyond a radial end face (20) of the bearing casing (12), characterised in that the sealing member (34) can be fitted by axial introduction into a cylindrical annular housing which is bounded by the cylindrical surfaces, in facing relationship with each other, of the bore (16) and the shaft (24), and which is open in the radial end face (20) of the casing (12), and in that a retaining bush (50) is disposed at the end (20) of the bearing casing (12), the said retaining bush (50) having a tubular portion (52) which extends axially within the annular housing, and the end face (54) of which constitutes an abutment for the sealing member (34).

2. A bearing according to Claim 1, characterised in that the retaining bush (50) includes a hood portion (56) in the form of a capuchon, through which the shaft (24) extends, and which bears axially against the radial end face (20) of the casing (12).

3. A bearing according to Claim 1 or Claim 2, characterised in that the retaining bush (50) includes sealing means (64) which are in cooperation with a portion, in facing relationship therewith, of the cylindrical surface of the shaft (24).

4. A bearing according to Claim 3, characterised in that the sealing means comprise a sealing lip (64) formed integrally with the retaining bush (50) and projecting radially from the cylindrical internal surface of the retaining bush (50) for sealing cooperation with the cylindrical surface of the shaft (24).

5. A bearing according to Claim 4 taken in combination with Claim 2, characterised in that the sealing lip (64) is formed in the vicinity of the free end (62) of the hood portion (56) of the retaining bush (50).

6. A bearing according to Claim 2 or Claim 5, characterised in that the hood portion (56) has an external profile (78) in the form of a surface of revolution, for guiding flow of liquid towards the outside of the casing (12).

7. A bearing according to one of the preceding Claims, characterised in that the tubular portion (52) of the bearing bush (50) is nested elastically in the annular housing.

8. A bearing according to Claim 7, characterised in that the tubular portion (52) of the retaining bush (50) is split axially so as to constitute resiliently deformable lugs (66).

9. A bearing according to any one of Claims 1 to 6, characterised in that the sealing member (34) is formed integrally (34) with the free end of the tubular portion (52) of the retaining bush (50).

10. A bearing according to any one of the preceding Claims, characterised in that means (60) are provided for axially immobilising the retaining bush (50) with respect to the casing (12).
